# EUROPÄISCHE PATENTSCHRIFT

(11) **EP 0 973 014 B1**
(45) Veröffentlichungstag und Bekanntmachung des Hinweises auf die Patenterteilung: **14.04.2004**
(21) Anmeldenummer: 99113005.5
(22) Anmeldetag: 06.07.1999
(51) Int. Cl.: G01D 5/347, G01D 18/00

(54) **Winkelmessvorrichtung und Verfahren zur Montage einer Winkelmessvorrichtung**
Rotational position measuring device and its mounting procedure
Appareil pour mesurer la position angulaire et son procédé de montage

(30) Priorität: 17.07.1998 DE 19832108
(43) Veröffentlichungstag der Anmeldung: 19.01.2000
(73) Patentinhaber: Dr. Johannes Heidenhain GmbH, 83292 Traunreut (DE)
(72) Erfinder: Mitterreiter, Johann, Dipl.-Ing., 83339 Chieming (DE)

(56) Entgegenhaltungen:
- EP-A- 0 353 395
- EP-A- 0 557 564
- DE-A- 3 740 744

## Beschreibung

Die Erfindung betrifft eine Winkelmeßvorrichtung gemäß dem Oberbegriff des Patentanspruches 1 sowie ein Verfahren gemäß dem Oberbegriff des Patentanspruches 8.

Aus der EP 0 353 395 B1 ist eine derartige Winkelmeßvorrichtung und ein derartiges Verfahren bekannt. Die beschriebenen Winkelmeßvorrichtungen haben keine eigene Lagerung. Um den Anbau an die zu messenden Objekte zu erleichtern ist die Lagezuordnung zwischen Teilungsträger und Abtasteinrichtung - welche für den Betrieb erforderlich ist - bereits vom Hersteller der Winkelmeßvorrichtung durch Vormontage festgelegt. Hierzu ist an der Nabe, an welche der Teilungsträger angebracht ist, eine Ringnut eingebracht. An der Abtasteinrichtung sind zwei Fixierelemente in Form von Vorsprüngen angeformt, welche mittels Druckelemente radial verlagerbar sind und im vormontierten Zustand in die Nut der Nabe eingreifen und somit die axiale Lagezuordnung zwischen Abtasteinrichtung und Teilungsträger fixieren.

Der Nachteil dieser Winkelmeßvorrichtung ist, daß die Lage der Nut bereits bei der Fertigung der Nabe exakt auf die Lage und die Toleranzen der Vorsprünge angepaßt werden muß. Bei der Fertigung sind somit sehr enge Toleranzen einzuhalten, was die Herstellung verteuert. Weiterhin ist bekannt, daß für Teilungsträger mit einer inkrementalen Teilung der erforderliche Abtastabstand von der Teilungsperiode abhängig ist. Die Lage der Nut muß also in Abhängigkeit der Teilungsperiode individuell exakt gefertigt werden. Dies bedingt die Fertigung sowie die Lagerhaltung unterschiedlicher Naben.

Der Erfindung liegt die Aufgabe zugrunde, eine Winkelmeßvorrichtung zu schaffen, bei der die erforderliche Zuordnung zwischen dem Teilungsträger und der Abtasteinrichtung auf einfache Weise vorgegeben ist und die einfach herstellbar ist.

Diese Aufgabe wird durch die Winkelmeßvorrichtung gemäß dem Patentanspruch 1 gelöst.

Die besonderen Vorteile der erfindungsgemäßen Winkelmeßvorrichtung liegen darin, daß die erforderliche Zuordnung zwischen der Teilung und der Abtasteinrichtung zumindest in axialer Richtung einfach fixierbar ist, ohne daß bei der Fertigung der Abtasteinrichtung und der Nabe diese Zuordnung berücksichtigt werden muß.

Der Erfindung liegt weiterhin die Aufgabe zugrunde, ein Verfahren zur Vormontage einer Winkelmeßvorrichtung zu schaffen, das eine einfache Zuordnung zwischen dem Teilungsträger und der Abtasteinrichtung ermöglicht.

Diese Aufgabe wird durch das Verfahren gemäß dem Patentanspruch 8 gelöst. Der besondere Vorteil dieses Verfahrens besteht darin, daß die Lagezuordnung erst bei der Vormontage bestimmt wird und diese Lagezuordnung trotzdem hochgenau und stabil festlegbar ist.

Vorteilhafte Ausführungen der Erfindung sind in den abhängigen Patentansprüchen angegeben.

Anhand der Zeichnungen werden Ausführungsbeispiele der Erfindung näher erläutert.

Es zeigt
- Figur 1: einen Querschnitt einer Winkelmeßvorrichtung,
- Figur 2: einen axialen Längsschnitt der Winkelmeßvorrichtung gemäß Figur 1 entlang der Linie II-II,
- Figur 3: die Winkelmeßvorrichtung im vormontierten Zustand im Querschnitt,
- Figur 4: einen axialen Längsschnitt der Winkelmeßvorrichtung gemäß Figur 3,
- Figur 5: die Winkelmeßvorrichtung im fertig montierten Betriebszustand,
- Figur 6: eine zweite Winkelmeßvorrichtung im Längsschnitt,
- Figur 7: eine dritte Winkelmeßvorrichtung im Längsschnitt und
- Figur 8: eine vierte Winkelmeßvorrichtung im Längsschnitt.

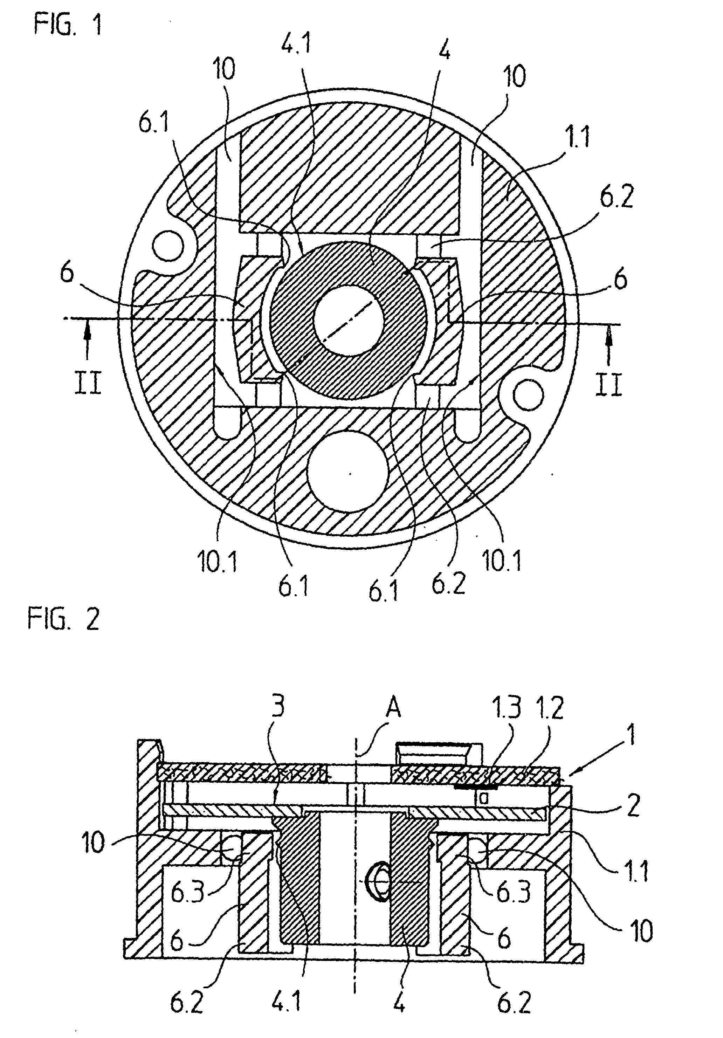

In den Figuren 1 bis 5 ist ein erstes Ausführungsbeispiel der Erfindung dargestellt. Die Winkelmeßvorrichtung besteht in an sich bekannter Weise aus einer in der Regel stationären Abtasteinrichtung 1 und einem Teilungsträger in Form einer Scheibe 2 mit einer Teilung 3.

Die Abtasteinrichtung 1 besteht aus einem Träger 1.1 und einer Platine 1.2 mit einer Abtastplatte 1.3 sowie einer nicht dargestellten Lichtquelle und mit Photodetektoren. Die Teilung 3 wird im Durchlicht- oder Auflichtverfahren abgetastet. Die bei der Abtastung erzeugten elektrischen Abtstsignale werden über eine nicht gezeigte Leitung zu einer Folgeelektronik, z.B. einem Zähler oder einer numerischen Steuerung geleitet. Die Photodetektoren sind im Strahlengang nach der Abtastplatte 1.3 angeordnet. Es ist auch möglich, daß die Abtastplatte 1.3 und die Photodetektoren ein gemeinsames Abtastelement bilden, indem die Abtaststruktur als Blende direkt auf der Oberfläche der Photodetektoren aufgebracht ist, oder daß die Photodetektoren strukturiert ausgebildet sind.

Die Teilscheibe 2 ist an einer Nabe 4 befestigt, wobei die Nabe 4 Mittel aufweist, um sie drehstarr an eine zu messende Welle 8 anzukoppeln. Im Beispiel ist hierzu eine Schraube vorgesehen. Es kann aber auch eine andere drehstarre Verbindung eingesetzt werden, wozu die Nabe 4 beispielsweise auch geschlitzt in Form einer Spannzange ausgeführt sein kann.

Um eine radiale und axiale Lagezuordnung (Abtastabstand a zwischen Abtastplatte 1.3 und Teilscheibe 2) zwischen Teilscheibe 2 und Abtasteinrichtung 1 bereits beim Hersteller der Winkelmeßvorrichtung realisieren zu können, ist am Außenumfang der Nabe 4 eine Ringschneide 4.1 angebracht. In bzw. an der Abtasteinrichtung 1 sind zwei radial einander gegenüberliegende Klemmbacken 6 angeordnet. Diese Klemmbacken 6 sind an einem Bereich 6.2 an die Abtasteinrichtung 1 angeformt und an einem davon beabstandeten, insbesondere axial beabstandeten Bereich 6.3 mittels eines Druckelementes 7 radial in Richtung der Nabe 4 verlagerbar. Bei dieser Verlagerung wirkt der Übergangsbereich 6.2 zwischen dem Träger 1.1 der Abtasteinrichtung 1 und der Klemmbacken 6 als Gelenk. Die Klemmbacken 6 sind quer zur Achse A, also radial federnd und in Richtung der Achse A starr.

Das Druckelement ist ein U-förmiger Bügel 7, der radial in symmetrisch gegenüberliegende Öffnungen 10 des Trägers 1.1 der Abtasteinrichtung 1 eingeschoben wird. Beim Einschieben stützen sich die äußeren Flächen der beiden Bügelschenkel an radial nach innen weisende Anschlagflächen 10.1 des Trägers 1.1 ab und drücken dadurch die beiden Klemmbacken 6 symmetrisch gleichmäßig nach innen.

Zur Vormontage wird der axiale Abstand a zwischen Teilscheibe 2 und Abtastplatte 1.3 mittels Messung oder einer Lehre exakt eingestellt. Dieser Zustand der Winkelmeßvorrichtung ist in den Figuren 1 und 2 dargestellt.

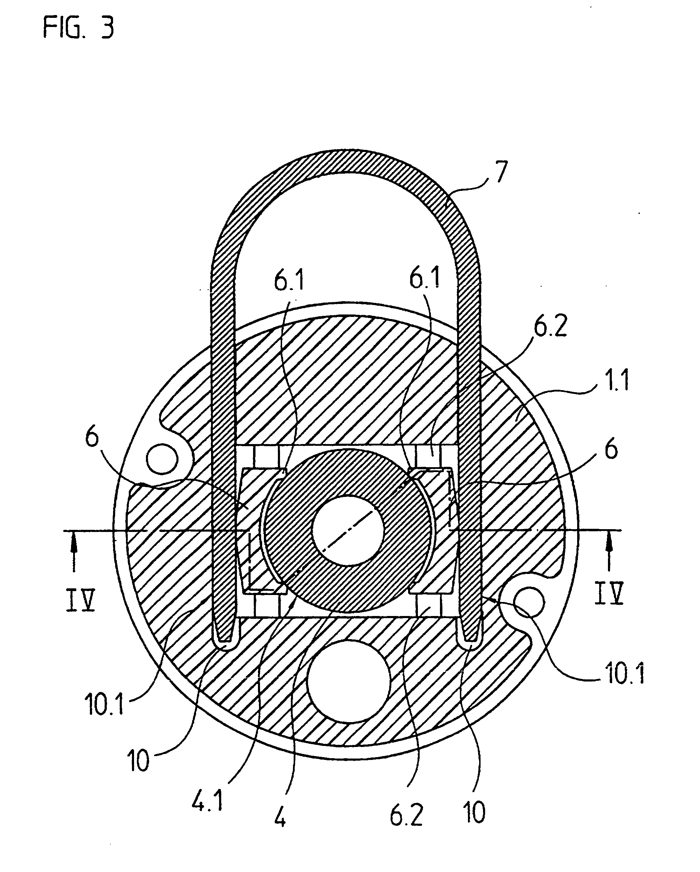

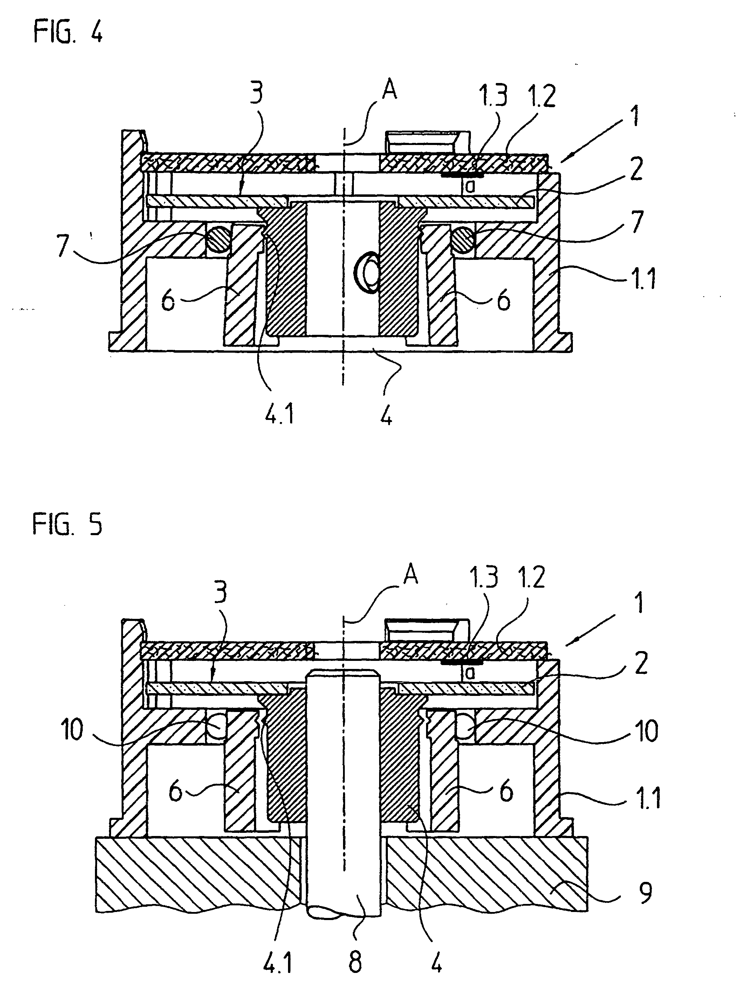

In diesem Zustand erfolgt eine radiale Klemmung zwischen Nabe 4 und Abtasteinrichtung 1, indem das Druckelement 7 die Klemmbacken 6 an die Nabe 4 drängt. Zur stabilen Fixierung dieser eingestellten Lagezuordnung ist die Ringschneide 4.1 vorgesehen, die sich in die Klemmbacken 6 eindrückt und einen axial wirkenden Formschluß bildet. Da die Nabe 4 üblicherweise ein Drehteil aus Metall ist, und die am Träger 1.1 der Abtasteinrichtung 1 angeformten Klemmbacken 6 aus Kunststoff bestehen, ist auf einfache Weise dieser Formschluß realisierbar. Um diesen Formschluß gezielt an gegeneinander versetzten Positionen über den Umfang der Ringschneide 4.1 verteilt zu erhalten, sind an jedem der Klemmbacken 6 mehrere Vorsprünge in Form von axial verlaufenden Stegen 6.1 angeformt. Beim radialen Einschieben des bügelförmigen Druckelementes 7 drückt sich die Ringschneide 4.1 nur im Bereich der Vorsprünge 6.1 in die Klemmbacken 6 ein, wodurch nur in diesem Bereich Material der Klemmbacken 6 durch die Ringschneide 4.1 verdrängt wird. Dieser vormontierte Zustand der Winkelmeßvorrichtung ist in den Figuren 3 und 4 dargestellt.

In diesem Zustand wird die Winkelmeßvorrichtung ausgeliefert, transportiert und an die zu messenden Objekte 8 und 9 angebaut. Der eingestellte Abstand a zwischen Teilscheibe 2 und Abtasteinrichtung 1 bleibt dabei sicher erhalten. Die zu messenden Objekte sind in der Regel eine Welle 8, deren Drehposition relativ zu einem stationären Teil 9 zu messen ist. Das stationäre Teil 9 kann dabei ein Motorgehäuse oder ein Motorflansch sein.

Nach dem Anbau an die zu messenden Objekte 8, 9 muß die Klemmverbindung zwischen Nabe 4 und Abtasteinrichtung 1 gelöst werden. Hierzu wird das Druckelement 7 so verschoben, daß die Klemmbacken 6 von der Nabe 4 entfernt werden. Da die Klemmbacken 6 an den Träger 1.1 der Abtasteinrichtung 1 angeformt sind und aus Kunststoff bestehen, bewegen sie sich nach Entfernen des Druckelementes 7 automatisch in die stabile Ruhelage zurück, indem sie zurückfedern. Der Bereich 6.2 am Übergang von Träger 1.1 zu Klemmbacke 6 wirkt dabei als elastisches Federgelenk. Die Winkelmeßvorrichtung im angebauten Zustand ist in Figur 5 dargestellt.

Zum besseren Verständnis der Erfindung werden bei allen Ausführungsbeispielen gleichwirkende Teile mit den gleichen Bezugszeichen versehen.

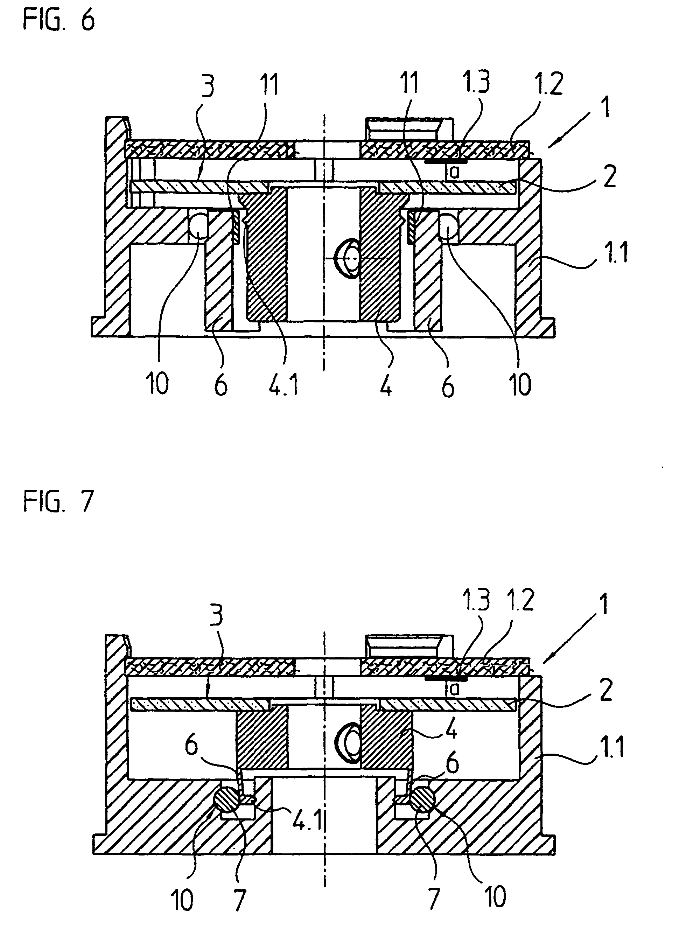

Die Erfindung ist auch realisierbar, wenn die Klemmbacken 6 nicht aus einem durch Materialverdrängung leicht verformbaren Material bestehen. Eine dieser Varianten ist in Figur 6 dargestellt. Die Klemmbacken 6 sind im auslenkbaren und klemmenden Bereich 6.3 mit einem durch Materialverformung und/oder Materialverdichtung leicht verdrängbaren Material 11 beschichtet, so daß sich die Ringschneide 4.1 in dieses Material eindrücken kann und einen Formschluß bildet.

Eine weitere Variante der Erfindung ist in Figur 7 dargestellt. Dabei sind die Klemmbacken 6 an der Nabe 4 vorgesehen, insbesondere daran angeformt. Die Klemmbacken 6 sind federnde Bereiche der Nabe 4, die über ein Druckelement 7 radial verlagerbar sind und sie weisen eine Erhebung in Form einer Ringschneide 4.1 auf, die sich in den Träger 1.1 der Abtasteinrichtung 1 eindrücken. Die axiale Zuordnung des Druckelementes 7 relativ zur Abtasteinrichtung 1 ist durch Öffnungen 10 vorgegeben und die axiale Zuordnung zwischen der Abtastplatte 1.3 der Abtasteinrichtung 1 und Nabe 4 wird durch das Eindringen der Ringschneide 4.1 in einen Teil der Abtasteinrichtung 1 fixiert. Nach erfolgter Montage der Nabe 4 und der Abtasteinrichtung 1 an zu messende Objekte wird das Druckelement 7 außer Eingriff gebracht und die Klemmbacken 6 federn in ihre Ruhelage zurück, in der sie keinen Kontakt mehr zu den Teilen der Abtasteinrichtung 1 aufweisen. Die Klemmbacken 6 sind bevorzugt Segmente eines axial geschlitzten und / oder dünn ausgebildeten Bereiches der Nabe 4.

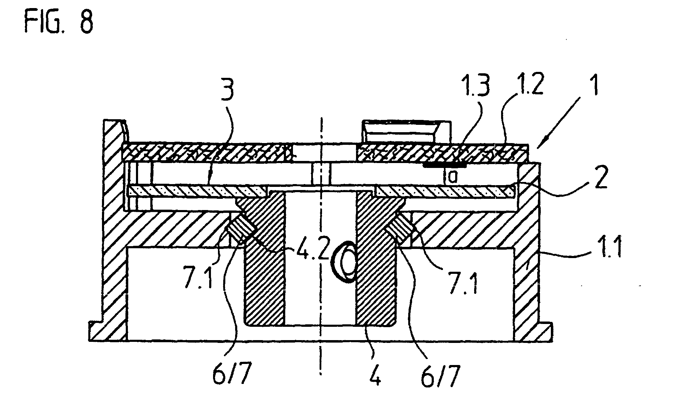

In Figur 8 ist ein Beispiel dargestellt, bei dem das Druckelement 7 auch die Funktion der Klemmbacken 6 hat. Das Druckelement ist aufgrund dieser Doppelfunktion auch mit dem Bezugszeichen 6/7 bezeichnet. In der Nabe 4 sind hierzu Ausnehmungen 4.2 eingebracht, die zur Führung des Druckelementes 6/7 dienen. Das Druckelement 6/7 weist Schneiden 7.1 auf, die sich beim radialen Einschieben des Druckelementes 6/7 in den Träger 1.1 der Abtasteinrichtung 1 eindrücken und die axiale Lagebeziehung zwischen Nabe 4 und Abtasteinrichtung 1 fixieren. Diese Fixierung sollte an zumindest drei über den Umfang der Nabe 4 verteilten Stellen erfolgen. Zum leichteren Einschieben des Druckelementes 6/7 kann es derart konisch geformt sein, daß es sich während des Einschiebens zunehmend in den Träger 1.1 eindrückt, die radiale Breite des Druckelementes 6/7 also zunimmt.

Zur Erzielung eines Formschlusses kann anstelle einer Ringschneide auch eine Riffelung vorgesehen sein, wobei die Ringschneide bzw. die Riffelung an der Nabe oder an der Abtasteinrichtung angebracht werden kann. Der erforderliche Formschluß kann durch Verformung der Abtasteinrichtung und/oder der Nabe erzielt werden, je nachdem an welchem Teil Erhebungen angebracht sind und aus welchem Material die Teile bestehen. Diese alternativen Ausführungen gelten für alle beschriebenen Ausführungsbeispiele.

Die Erfindung ist nicht auf die beschriebene lichtelektrische Winkelmeßvorrichtung beschränkt, sondern sie ist auch bei induktiven, magnetischen und kapazitiven Winkelmeßvorrichtungen realisierbar. Die Teilung kann inkremental oder absolut ausgeführt sein.

Anstelle des bügelförmigen Druckelementes 7 kann auch ein anderes Druck ausübendes Element oder können mehrere Elemente vorgesehen sein. Dabei kann das Druckelement in bzw. an der Abtasteinrichtung axial oder radial verschiebbar sein. So kann das Druckelement auch an der Abdeckung (Gehäuse) vorgesehen sein, so daß durch Drehung oder durch axiale Verschiebung der Abdeckung relativ zur Abtasteinrichtung das Druckelement den Formschluß bewirken und auch wieder aufheben kann. Zur möglichen Ausbildung und Relativanordnung der Druckelemente wird auch auf die EP 0 353 395 B1 verwiesen.

## Patentansprüche

1. Winkelmeßvorrichtung zur Messung der Winkellage zweier um eine Achse (A) relativ zueinander drehbarer Objekte (8, 9) mit
- einem Träger (2, 4) einer Teilung (3), der an dem ersten Objekt (8) anschließbar ist,
- einer Abtasteinrichtung (1), die am zweiten Objekt (9) befestigbar ist,
- zumindest einem Klemmelement (6), welches zumindest die axiale Lagebeziehung (a) zwischen der Teilung (3) und der Abtasteinrichtung (1) vor und während deren Anbau an die zu messenden Objekte (8, 9) festlegt, **dadurch gekennzeichnet, daß**
- ein Bereich der Abtasteinrichtung (1) und/oder des Trägers (2, 4) im Klemmbereich in Form von Materialverdrängung radial eingedrückt ist, und diese Materialverdrängung einen zumindest axial wirkenden Formschluß zwischen Abtasteinrichtung (1) und Träger (2, 4) bewirkt.

2. Winkelmeßvorrichtung nach Anspruch 1, **dadurch gekennzeichnet, daß** der Träger eine Nabe (4) ist, und das Klemmelement (6) mittels eines Druckelementes (7) an die Nabe (4) gedrängt ist.

3. Winkelmeßvorrichtung nach Anspruch 2, **dadurch gekennzeichnet, daß** das Druckelement ein U-förmiger Bügel (7) ist, dessen Schenkel sich an radial nach innen weisenden Anschlagflächen (10.1) der Abtasteinrichtung (1) abstützen.

4. Winkelmeßvorrichtung nach einem der Ansprüche 2 bis 3, **dadurch gekennzeichnet, daß** die Nabe (4) zumindest einen Vorsprung (4.1) aufweist, welcher in einem Bereich der Abtasteinrichtung (1) eingedrückt ist.

5. Winkelmeßvorrichtung nach Anspruch 4, **dadurch gekennzeichnet, daß** der Vorsprung eine Ringschneide (4.1) ist, die an mehreren über den Umfang verteilten Stellen in die Abtasteinrichtung (1) eingedrückt ist.

6. Winkelmeßvorrichtung nach einem der Ansprüche 2 bis 5, **dadurch gekennzeichnet, daß** das Klemmelement (6) an der Abtasteinrichtung (1) angeformt ist und an einem Bereich (6.3) durch das Druckelement (7) radial verlagerbar ist.

7. Winkelmeßvorrichtung nach einem der Ansprüche 2 bis 6, **dadurch gekennzeichnet, daß** das Klemmelement (6) aus Kunststoff und die Nabe (4) aus Metall besteht, wobei der Vorsprung (4.1) der Nabe (4) Material des Klemmelementes (6) verdrängt hat.

8. Verfahren zur Montage einer Winkelmeßvorrichtung **gekennzeichnet durch** folgende Verfahrensschritte
- Einstellen des Abtastabstandes (a) zwischen einer Teilung (3) und einer Abtasteinrichtung (1) der Winkelmeßvorrichtung,
- Erzeugen eines den Abtastabstand (a) fixierenden Formschlusses zwischen der Abtasteinrichtung (1) und eines die Teilung (3) tragenden Trägers (2, 4) **durch** Eindrücken und Materialverdrängung zumindest eines Bereiches des Trägers (2, 4) und / oder der Abtasteinrichtung (1 ),
- Anbau des Trägers (2, 4) und der Abtasteinrichtung (1) an die zu messenden Objekte (8, 9) und
- Lösen des Formschlusses.

9. Verfahren nach Anspruch 8, **dadurch gekennzeichnet, daß** der Formschluß erzeugt wird, indem zumindest ein an die Abtasteinrichtung (1) angeformtes Klemmelement (6) durch ein Druckelement (7) radial in Richtung des Trägers (2, 4) verlagert wird und sich in das Klemmelement (6) ein vorstehender Bereich (4.1) des Trägers(2, 4) eindrückt und Material des Klemmelementes (6) verdrängt.

10. Verfahren nach Anspruch 8 oder 9, **dadurch gekennzeichnet, daß** der Formschluß erzeugt wird, indem zumindest ein an der Abtasteinrichtung (1) angeformter oder befestigter Bereich (6.3) des Klemmelementes (6) durch das Druckelement (7) aus seiner Ruhelage verlagert wird und der Formschluß gelöst wird, indem das Druckelement (7) vom Klemmelement (6) entfernt wird und das Klemmelement (6) in seine Ruhelage zurückfedert.

## Claims

1. Angle measuring system for measuring the angular position of two objects (8, 9) which are rotatable around an axis (A) in relation to each other, having
- a support (2, 4) of a graduation (3), which can be connected on the first object (8),
- a scanning device (1), which can be fastened on the second object (9),
- at least one clamping element (6), which fixes at least the axial positional relationship (a) between the graduation (3) and the scanning device (1) before and during their mounting on the objects (8, 9) to be measured, **characterised in that**
- an area of the scanning device (1) and/or of the support (2, 4) are/is radially pressed together in the clamping area by material displacement, and this material displacement causes an at least axially acting interlocking connection between the scanning device (1) and the support (2, 4).

2. Angle measuring system according to claim 1, **characterised in that** the support is a hub (4), and the clamping element (6) is urged against the hub (4) by means of a pressure element (7).

3. Angle measuring system according to claim 2, **characterised in that** the pressure element is a U-shaped hoop (7), whose legs are supported at radially inward pointing contact faces (10.1) of the scanning device (1).

4. Angle measuring system according to one of claims 2 to 3, **characterised in that** the hub (4) has at least one projection (4.1) which has been pressed into an area of the scanning device (1).

5. Angle measuring system according to claim 4, **characterised in that** the projection is an annular capped gripping point (4.1), which is pressed into the scanning device (1) at a plurality of locations which are distributed over the circumference.

6. Angle measuring system according to one of claims 2 to 5, **characterised in that** the clamping element (6) is formed on the scanning device (1) and can be radially displaced on an area (6.3) by the pressure element (7).

7. Angle measuring system according to one of claims 2 to 6, **characterised in that** the clamping element (6) is made of plastic and the hub (4) of metal, the projection (4.1) of the hub (4) having displaced material of the clamping element (6).

8. Method for mounting an angle measuring system, **characterised by** the following steps:
- setting the scanning distance (a) between a graduation (3) and a scanning device (1) of the angle measuring system,
- creating an interlocking connection between the scanning device (1) and a support (2, 4) supporting the graduation (3) which fixes the scanning distance (a) by pressing in and displacing the material of at least one area of the support (2, 4) and/or of the scanning device (1),
- installation of the support (2, 4) and the scanning device (1) on the objects (8, 9) to be measured, and
- releasing the interlocking connection.

9. Method according to claim 8, **characterised in that** the interlocking connection is created **in that** at least one clamping element (6), formed on the scanning device (1), is radially displaced by a pressure element (7) in the direction toward the support (2, 4) and a projecting area (4.1) of the support (2, 4) is pressed into the clamping element (6) and displaces the material of the clamping element (6).

10. Method according to claim 8 or 9, **characterised in that** the interlocking connection is created **in that** at least one area (6.3) of the clamping element (6), which is formed or fastened on the scanning device (1), is displaced out of its resting position by the pressure element (7), and the interlocking connection is released **in that** the pressure element (7) is removed from the clamping element (6) and the clamping element (6) springs back resiliently into its resting position.

## Revendications

1. Dispositif de mesure d'angles pour la mesure de la position angulaire de deux objets (8, 9) tournant l'un par rapport à l'autre autour d'un axe (A), comportant
un support (2, 4) d'une division (3) qui peut être lié au premier objet (8),
un dispositif de palpage (1) qui peut être fixé au deuxième objet (9),
au moins un élément de blocage (6) qui au moins fixe la position relative (a) entre la division (3) et le dispositif de palpage (1) avant et pendant leur montage sur les objets (8, 9) à mesurer, **caractérisé**
**en ce qu'**une partie du dispositif de palpage (1) et/ou du support (2, 4) est enfoncée radialement dans la partie de blocage sous forme de refoulement de matière et le refoulement de matière réalise une liaison par obstacles, entre le dispositif de palpage (1) et le support (2, 4) qui est active au moins dans la direction axiale.

2. Dispositif de mesure d'angles selon la revendication 1, **caractérisé en ce que** le support est un moyeu (4) et l'élément de blocage (6) est pressé sur le moyeu (4) au moyen d'un élément de poussée (7).

3. Dispositif de mesure d'angles selon la revendication 2, **caractérisé en ce que** l'élément de poussée (7) est un étrier (7) en forme de U, dont les branches prennent appui sur des surfaces formant butées (10.1) du dispositif de palpage (1), tournées radialement vers l'intérieur.

4. Dispositif de mesure d'angles selon une des revendications 2 à 3, **caractérisé en ce que** le moyeu (4) présente au moins une saillie (4.1) qui est enfoncée dans une partie du dispositif de palpage (1).

5. Dispositif de mesure d'angles selon la revendication 4, **caractérisé en ce que** la saillie est une arête annulaire (4.1) qui est enfoncée dans le dispositif de palpage (1) en plusieurs points répartis sur le pourtour de celui-ci.

6. Dispositif de mesure d'angles selon une des revendications 2 à 5, **caractérisé en ce que** l'élément de blocage (6) est aménagé sur le dispositif de palpage (1) et peut être déplacé radialement par l'élément de poussée (7) au niveau d'une portion (6.3).

7. Dispositif de mesure d'angles selon une des revendications 2 à 6, **caractérisé en ce que** l'élément de blocage (6) est en matière plastique et le moyeu (4) en métal, la saillie (4.1) du moyeu refoulant le matériau de l'élément de blocage (6).

8. Procédé de montage d'un dispositif de mesure d'angles, **caractérisé par** les étapes suivantes qui consistent à
régler la distance de palpage (a) entre une division (3) et un dispositif de palpage (1) du dispositif de mesure d'angles,
réaliser une liaison par obstacle qui fixe la distance de palpage (a) entre le dispositif de palpage (1) et un support (2, 4) portant la division (3) par enfoncement et refoulement de matière au moins dans une partie du support (2, 4) et/ou du dispositif de palpage (1),
monter le support (2, 4) et le dispositif de palpage (1) sur les objets à mesurer (8, 9) et
supprimer la liaison par obstacle.

9. Procédé selon la revendication 8, **caractérisé en ce que** la liaison par obstacle est réalisée en déplaçant radialement en direction du support (2, 4), à l'aide d'un élément de poussée (7), au moins un élément de blocage (6) façonné sur le dispositif de palpage (1), une partie (4.1) en saillie du support (2, 4) s'enfonçant dans l'élément de blocage (6) et le matériau de l'élément de blocage (6) étant refoulé.

10. Procédé selon la revendication 8 ou 9, **caractérisé en ce que** la liaison par obstacle est réalisée en déplaçant depuis sa position de repos, à l'aide de l'élément de poussée (7), une partie (6.3) de blocage (6) façonnée sur ou fixée au dispositif de palpage (1), et **en ce que** la liaison par obstacle est supprimée en éloignant l'élément de poussée (7) de l'élément de blocage (6), et ledit élément de blocage (6) revenant par élasticité dans sa position de repos.
